# EUROPEAN PATENT APPLICATION

(11) **EP 1 589 638 A1**
(43) Date of publication of application: **26.10.2005**
(21) Application number: 03701873.6
(22) Date of filing: 27.01.2003
(51) Int. Cl.: H02K 11/00

(54) **ELECTRIC MOTOR UNIT WITH CONTROLLER**

(71) Applicant: Hitachi, Ltd., Tokyo 100-8280 (JP); Hitachi Car Engineering Co., Ltd., Hitachinaka-shi, Ibaraki 312-0062 (JP)
(72) Inventor: Saito, Masashi Automotive Products of Hitachi,Ltd., Hitachinaka-shi, Ibaraki 312-8503 (JP); Nakano, Youichi Automotive Products of Hitachi,Ltd, Hitachinaka-shi, Ibaraki 312-8503 (JP); Kameshiro, Y. c/o Hitachi Car Engineering Co, Ltd., Hitachinaka-shi, Ibaraki 312-0062 (JP); Tazawa, Satoshi Hitachi Car Engineering Co, Ltd., Hitachinaka-shi, Ibaraki 312-0062 (JP); Harada, Kouji Automotive Products of Hitachi, Ltd., Hitachinaka-shi, Ibaraki 312-8503 (JP)
(74) Representative: Beetz & Partner
(86) International application number: PCT/JP2003/000717
(87) International publication number: WO 2004/068679

(57) **Abstract**

An object of the present invention is to provide an electric motor unit with a controller of a machinery and electricity integration type for eliminating variations due to mechanical factors and obtaining excellent operation reliability.

A magnet member 8 is attached to a gear 13 on the side of a gear case 6, and a sensor 3 for sensing the magnet member 8 and detecting a rotational angle of the gear 13 in a controller case 56, and a cylindrical opening 57 concentric with the rotational center of the gear 13 is installed on the gear case 6, and a cylindrical part 58 fitting into the cylindrical opening 57 is installed on the controller case 56, and the controller case 56 is positioned and mounted on the gear case 6 by the fitting between the cylindrical part 58 and the cylindrical opening 57.

## Description

### FIELD OF THE INVENTION

The present invention relates to an electric motor unit with a controller and more particularly to an electric motor unit with a controller of a machinery and electricity integration type used in components of the drive system of a car such as a transmission and four-wheel drive transfer.

### BACKGROUND OF THE INVENTION

As an electric motor unit with a controller for switching the operation condition of the drive line of a car such as a transmission and four-wheel drive transfer, there is a machinery and electricity integration type (for example, USP 6,155,126) available which has a built-in gear train of deceleration system for driving to rotate a switching operation member such as a shift rail of four-wheel drive transfer in one housing assembly, has an attached electric motor for driving to rotate the gear train in the housing assembly, and furthermore has an attached printed wiring board in which a microcontroller for controlling to drive the electric motor and a non-contact sensor for sensing the magnetic pole of a magnet ring attached to a drive pinion of the electric motor are mounted.

In the conventional electric motor unit with a controller as mentioned above, the printed wiring board for control mounting the microcontroller is incorporated in the housing assembly having the built-in gear train, so that the printed wiring board is exposed in a very bad atmosphere in which oil of the housing assembly and worn metallic powder of the gears are floating, and the magnetic field for the non-contact sensor is disturbed, and there is a fear of a malfunction.

Further, the housing assembly becomes warm due to heat of the motor and frictional heat by rotation of the gear train, so that the printed wiring board in the housing assembly is exposed in a high-temperature atmosphere and there is a fear of a thermal malfunction.

Further, in the conventional electric motor unit with a controller as mentioned above, for suppressing changing in the relative location (separation distance = air gap) between the magnet ring on the gear side and the non-contact sensor on the housing assembly side and stably detecting an accurate rotational position, it is not taken into account to minimize variations due to assembling of the printed wiring board and changing due to thermal expansion of the housing assembly.
Therefore, it is difficult to detect stably an accurate rotational position.

The wiring board for controlling to drive the electric motor includes a large current wiring pattern of the motor drive system, a signal pattern, and a sensor pattern and the prior art arranges a large current wiring pattern at the same potential extending over a plurality of conductor layers, so that positional interference with another signal pattern in the board occurs, and the pattern width is made thinner, and the pattern length is made longer, thus a problem arises that generation of heat due to the large current is great, and the heat radiation is bad, and a malfunction due to the thermal effect is caused easily.

In the prior art, the large current wiring pattern and sensor signal pattern branch at a plurality of points, so that, a potential difference due to the large current is generated in the sensor signal pattern and a problem arises that the sensor accuracy is degraded. Further, in the prior art, the case of the wiring board and the housing assembly are not connected electrically, so that a problem arises that the static electricity resistance is inferior.

In the prior art, for RAM reading, RAM rewriting, ROM reading, and ROM rewriting in the microcontroller (microcomputer) mounted in the wiring board, exclusive signal lines are necessary and a problem of an increase in cost and an increase in the number of steps of the harness and terminal arises.

### SUMMARY OF THE INVENTION

The present invention was developed to solve the aforementioned problems and is intended to provide an electric motor unit with a controller of a machinery and electricity integration type which eliminates the possibilities of variations and malfunctions due to mechanical and thermal factors, indicates excellent operation reliability and durability, and is simple and highly efficient.

To accomplish the above object, the electric motor unit with a controller of the present invention includes a gear case having built-in gears, an electric motor attached to the gear case for driving to rotate the gears, and a controller case attached to the gear case having a built-in electric controller for controlling to drive the electric motor, and a sensing element such as a magnet is attached to the gears, and a sensor for sensing the sensing element and detecting the rotational angle of the gears is attached in the controller case, and the gear case has a cylindrical opening concentric with the rotational center of the gears, and the controller case has a cylindrical part fit into the cylindrical opening, and by the fitting between the cylindrical part and the cylindrical opening, the controller case is positioned and mounted on the gear case.

According to the electric motor unit with a controller of the present invention, in the cylindrical opening concentric with the rotational center of the gears formed in the gear case, the cylindrical part of the controller case is fit, and by the fitting between the cylindrical part and the cylindrical opening, the controller case is positioned and mounted on the gear case, so that the attaching position of the controller case to the gear case eliminates variations in the assembling, thereby is uniquely decided mechanically and highly accurately, therefore the relative position relationship between the sensor on the controller case side and the sensing element on the gear case side is decided highly accurately, and the accurate rotational position can be detected stably.

Furthermore, in the fitting part between the cylindrical part and the cylindrical opening, an O-ring made of an elastic body is clamped and by the center adjusting operation of the O-ring, the attaching position accuracy of the controller case to the gear case can be enhanced.

Particularly, the non-contact rotary sensor of a magnetism detection type detects the rotational angle of the rotator (gear) by changing in the magnetic field, so that to enhance the detection accuracy, the magnetic field acting on the sensor element is preferably symmetrical to the sensor element with respect to point. Therefore, the sensor on the controller case side must be arranged on the same axis as that of the magnet which is the sensing element on the rotator. In this case, the controller case is positioned and mounted on the gear case by the fitting between the cylindrical part and the cylindrical opening, and the attaching position accuracy of the controller case to the gear case is enhanced by the center adjusting operation of the O-ring, so that the sensor can be arranged on the same axis as that of the rotational center of the sensing element on the gears, thus the sensor accuracy can be improved.

Further, in the electric motor unit with a controller of the present invention, the controller case is a closed structure case hermetically separated from the inside of the gear case.

In the electric motor unit with a controller of the present invention, the electric controller stored in the controller case will not be exposed in a very bad atmosphere including oil in the gear case and worn metallic powder of the gears.

Further, the electric motor unit with a controller of the present invention includes a gear case having built-in gears, an electric motor attached to the gear case for driving to rotate the gears, and a controller case attached to the gear case having a built-in electric controller for controlling to drive the electric motor, and a sensing element such as a magnet is attached to the gears, and a sensor for sensing the sensing element and detecting the rotational angle of the gears is attached in the controller case, and members for deciding the separation distance between the sensing element and the sensor are composed of the same kind of materials relating to the coefficient of linear expansion.

According to the electric motor unit with a controller of the present invention, the members for deciding the separation distance between the sensing element and the sensor are composed of the materials which have the same kind of the linear expansion coefficient substantially such as an aluminum series metal, so that even if these members are thermally expanded or thermally shrunk, the separation distance between the sensing element and the sensor is varied little or not varied and the accurate rotational position can be detected stably.

Further, in the electric motor unit with a controller of the present invention, a sensing element is mounted on the gears by a mount member and the members for deciding the separation distance between the sensing element and the sensor include the mount member, gear case, and controller case.

According to the electric motor unit with a controller of the present invention, the mount member of the sensing element, gear case, and controller case are composed of the materials which have the same kind of the linear expansion coefficient substantially such as an aluminum series metal, so that even if these members are thermally expanded or thermally shrunk, the separation distance between the sensing element and the sensor is varied little or not varied and the accurate rotational position can be detected stably.

Further, the electric motor unit with a controller of the present invention includes a gear case having built-in gears, an electric motor attached to the gear case for driving to rotate the gears, and a controller case attached to the gear case having a built-in wiring board of an electric controller for controlling to drive the electric motor, and the wiring board is composed of a multi-layer wiring board with many insulating base materials having conductor layers laminated in layers, and in the conductor layer of each insulating base material, the large current wiring pattern is dispersed and arranged.

According to the electric motor unit with a controller of the present invention, the large current wiring pattern is dispersed and arranged in the conductor layers of the insulating base materials, so that it is possible to widen the current wiring pattern and arrange (layout) the pattern with the shortest wire length. The pattern resistance depends on the conductor pattern width and conductor pattern length, so that when the conductor pattern is wide and the conductor pattern is short, the pattern resistance can be suppressed, and the resistance generation of heat due to the current flowing though the large current wiring pattern can be reduced, and it is thermally advantageous.

Further, the electric motor unit with a controller of the present invention includes a gear case having built-in gears, an electric motor attached to the gear case for driving to rotate the gears, and a controller case attached to the gear case having a built-in wiring board of an electric controller for controlling to drive the electric motor, and the wiring board includes the large current wiring pattern, signal pattern, and sensor pattern, and the large current wiring pattern, signal pattern, and sensor pattern are connected at one point.

According to the electric motor unit with a controller of the present invention, the large current wiring pattern, signal pattern, and sensor pattern are connected at one point, so that even if a large current flows through the large current wiring pattern, an occurrence of a potential difference between the ground of the signal pattern and the ground of the sensor pattern is avoided and the adverse affect by the large current on another signal system and sensor system can be suppressed.

Further, the electric motor unit with a controller of the present invention includes a gear case having built-in gears, an electric motor attached to the gear case for driving to rotate the gears, and a controller case attached to the gear case having a built-in wiring board of an electric controller for controlling to drive the electric motor, and the wiring board is adhered and fixed to the controller case by two kinds of adhesives such as a high temperature conductive adhesive and a very strong adhesive whose adhesive strength is higher than that of the high temperature conductive adhesive. As a high temperature conductive adhesive, there is a resin series adhesive including a metallic filler having high thermal conductivity available and as a very strong adhesive, there is an ordinary silicon series adhesive available.

According to the electric motor unit with a controller of the present invention, the wiring board is adhered and fixed to the controller case by two kinds of adhesives such as the high temperature conductive adhesive and the very strong adhesive whose adhesive strength is higher than that of the high temperature conductive adhesive, so that that the heat of the wiring board is effectively conducted to the controller case by the high temperature conductive adhesive and that the wiring board is adhered to the controller case at a required adhesive strength by the very strong adhesive are compatible.

Further, the electric motor unit with a controller of the present invention includes a gear case having built-in gears, an electric motor attached to the gear case for driving to rotate the gears, and a controller case attached to the gear case having a built-in wiring board of an electric controller for controlling to drive the electric motor, and the controller case and gear case are composed of a conductive material and the grounding part of the wiring board, controller case, and gear case are electrically connected.

According to the electric motor unit with a controller of the present invention, the grounding part of the wiring board, controller case, and gear case are electrically connected, so that the electric capacity of the grounding part of the wiring board is increased, and a disturbance such as high frequency noise transferred from an external connector can be absorbed, and a control circuit having a superior noise resistance can be realized.

Further, the electric motor unit with a controller of the present invention includes a gear case having built-in gears, an electric motor attached to the gear case for driving to rotate the gears, and a controller case attached to the gear case having a built-in microcomputer for controlling to drive the electric motor, and has a function for performing RAM reading, RAM rewriting, ROM reading, and ROM rewriting in the microcomputer by controller area network (CAN) communication.

According to the electric motor unit with a controller of the present invention, RAM reading, RAM rewriting, ROM reading, and ROM rewriting in the microcomputer can be performed by CAN communication and the debug line (interface cable) of the microcomputer and connector pins can be reduced. By doing this, the number of connector pins can be reduced and the communication wiring cost can be decreased.

Further, the electric motor unit with a controller of the present invention switches the operation condition of the drive line of a car such as a transmission and four-wheel drive transfer.

Further, according to the electric motor unit with a controller of the present invention, in an electric motor unit with a controller for switching the operation condition of the drive line of a car such as a transmission and four-wheel drive transfer, the operation and effect of the electric motor unit with a controller of the aforementioned invention can be obtained.

### BRIEF DESCRIPTION OF THE DRAWINGS

Fig. 1 is a block diagram showing the power transfer system of a car of a four-wheel drive type to which the electric motor unit with a controller of the present invention is applied.
Fig. 2 is an exploded perspective view of the upper half showing an embodiment of the electric motor unit with a controller of the present invention.
Fig. 3 is an exploded perspective view of the lower half showing an embodiment of the electric motor unit with a controller of the present invention.
Fig. 4 is a cross sectional view showing an embodiment of the electric motor unit with a controller of the present invention.
Figs. 5(a) and 5(b) are enlarged cross sectional views showing the joining structure of the warm wheel and magnet holder of the electric motor unit with a controller of an embodiment.
Figs. 6(a) and 6(b) are enlarged cross sectional views showing the joining structure of the magnet holder and magnet member of the electric motor unit with a controller of an embodiment.
Fig. 7 is an exploded perspective views of the joining part of the warm wheel, magnet holder, and magnet member of the electric motor unit with a controller of an embodiment.
Fig. 8(a) is a plan view of the board layout part of the electric motor unit with a controller of an embodiment and Fig. 8(b) is a plan view showing the enlarged wiring part of the wiring board.
Fig. 9 is a functional block diagram of the shift controller of the electric motor unit with a controller of an embodiment.
Fig. 10 is an illustration showing the board adhesion structure of the electric motor unit with a controller of an embodiment.
Fig. 11 is a cross sectional view along the line A-A shown in Fig. 10.
Fig. 12 is an electric circuit diagram of the wiring pattern formed on the wiring board of the electric motor unit with a controller of an embodiment.
Fig. 13 is a plan view of the first layer of the wiring board of the multilayer structure of the electric motor unit with a controller of an embodiment.
Fig. 14 is a plan view of the second layer of the wiring board of the multilayer structure of the electric motor unit with a controller of an embodiment.
Fig. 15 is a plan view of the third layer of the wiring board of the multilayer structure of the electric motor unit with a controller of an embodiment.
Fig. 16 is a plan view of the fourth layer of the wiring board of the multilayer structure of the electric motor unit with a controller of an embodiment.
Fig. 17 is a plan view of the fifth layer of the wiring board of the multilayer structure of the electric motor unit with a controller of an embodiment.
Figs. 18(a) and 18(b) are illustrations showing communication of the electric motor unit with a controller of an embodiment.

### DESCRIPTION OF THE PREFERRED EMBODIMENTS

Hereinafter, the embodiments of the present invention will be explained in detail with reference to the accompanying drawings.

Power transfer system of a four-wheel drive car:

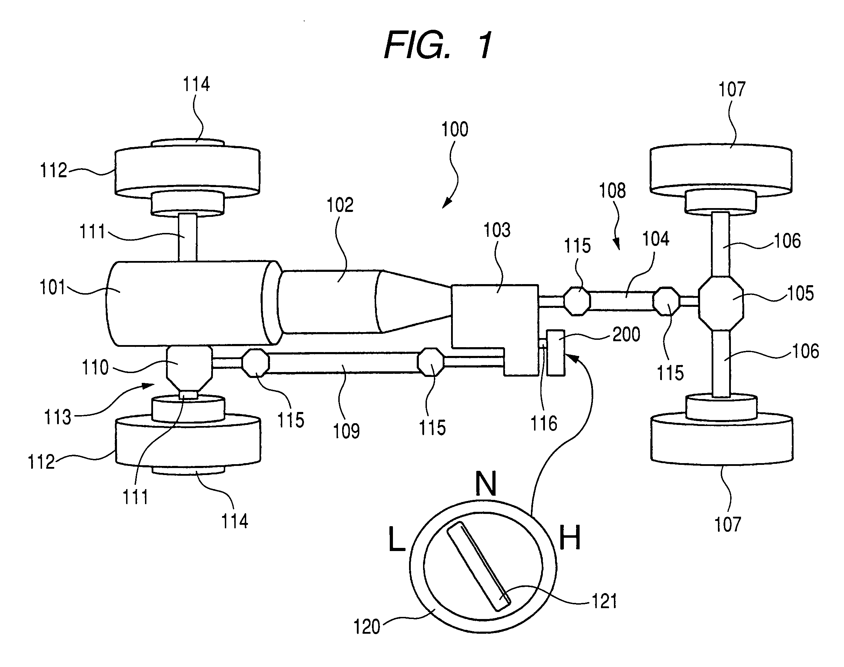

Fig. 1 shows the power transfer system of a car of a four-wheel drive type to which the electric motor unit with a controller of the present invention is applied.

The drive train of the four-wheel drive car is schematically shown with a reference number of 100. The drive train 100 of the four-wheel drive car is connected to a motor 101 such an internal combustion engine and has a transmission 102 driven by the motor 101. The transmission 102 may be either of the general automatic type and manual type.

To the latter stage of the transmission 102, a transfer case assembly 103 for four-wheel drive switching is connected. The transfer case assembly 103 always supplies driving force to a rear wheel drive line 108 including a back thrust shaft 104, a back differential device 105, a pair of left and right back wheel shafts 106, and a pair of left and right back tire and wheel assemblies 107.

Further, the transfer case assembly 103 selectively supplies driving force to a front wheel drive line 113 including a front thrust shaft 109, a front differential device 110, a pair of left and right front wheel shafts 111, and a pair of left and right front tire and wheel assemblies 112.

The pair of left and right front tire and wheel assemblies 112 are preferably connected directly to the pair of left and right front wheel shafts 111 respectively. In place of it, a pair of stopper hubs 114 which can be operated manually or remote controlled may be arranged operably between the pair of left and right front wheel shafts 111 and the pair of left and right front tire and wheel assemblies 112 respectively and be selectively connected. Both of the rear wheel drive line 108 which is a main drive line and the front wheel drive line 113 which is a secondary drive line can arrange universal couplings 115 at the shaft couplings of the back thrust shaft 104 and the front thrust shaft 109. The universal couplings 115 permit static and dynamic shifts and inconsistency between the thrust shafts and the elements.

### Mode changeover switch:

Within a range which a car driver can reach, a driver control board or an assembly 120 is arranged. The assembly 120 has a manual mode changeover switch 121 for selecting one of a plurality of running modes switched and set by the transfer case assembly 103.

Overall structure of the electric motor unit with a controller:

A machinery and electricity integration type controller for switching the transfer case assembly 103 is called an electric motor unit with a controller (shift controller) 200. The electric motor unit with a controller 200 is installed beside the transfer case assembly 103.

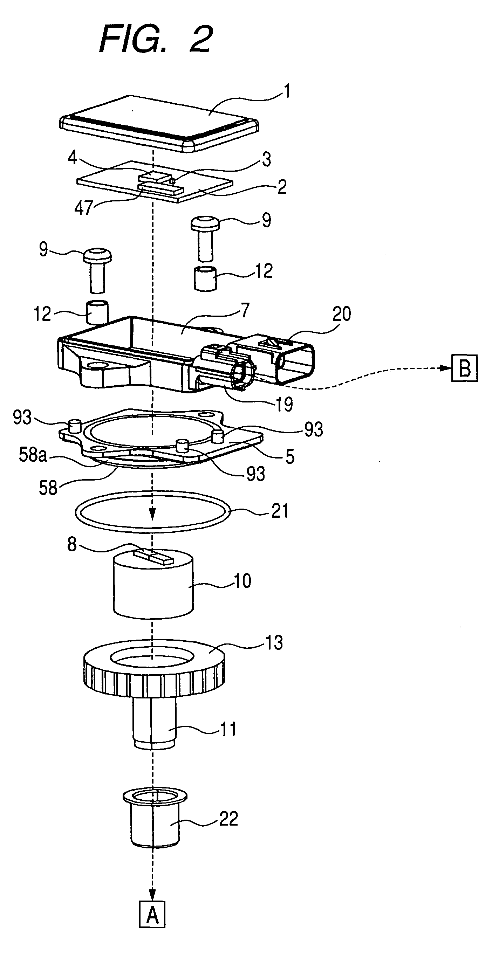

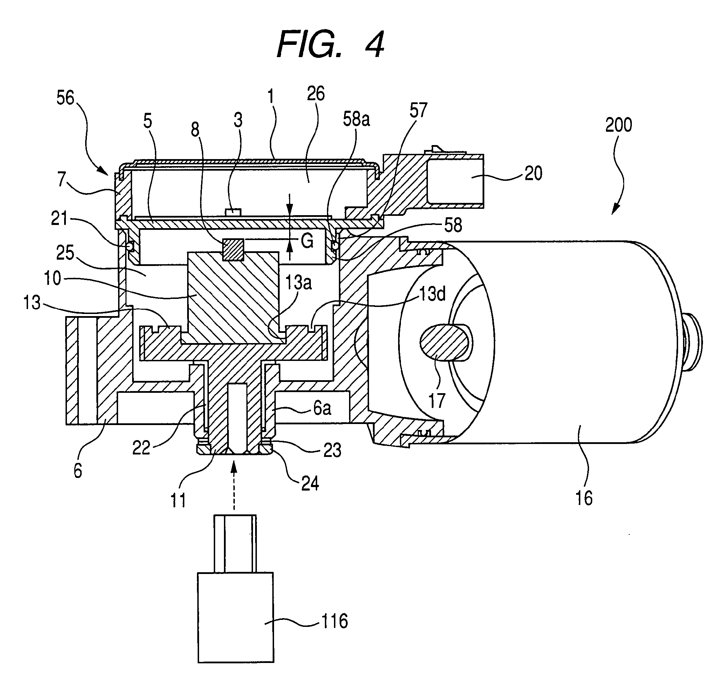

The electric motor unit with a controller 200 has an output shaft 11 having a hand-reeling hole and by the output shaft 11 (refer to Figs. 2 and 4), is connected to the shift rail 116 of the transfer case assembly 103 in relation to torque transfer. The electric motor unit with a controller 200 inputs an output signal of the mode changeover switch 121 and car speed information, engine speed information, and throttle position information from an engine control unit (not drawn), and makes the output shaft 11 follow the target rotational angle according these input information.

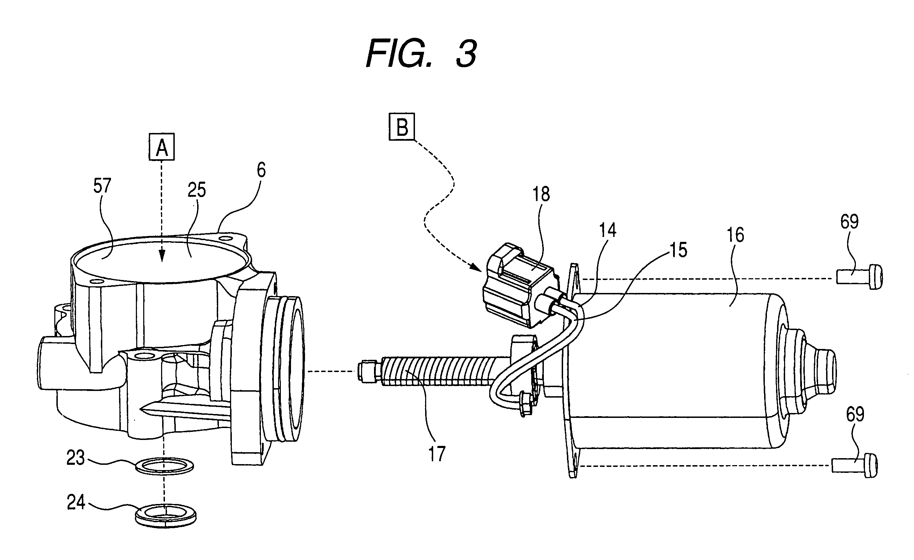

The electric motor unit with a controller 200 will be explained in detail by referring to Figs. 2 to 4.

The electric motor unit with a controller 200 includes a gear case 6 made of aluminum as a main structural body. The gear case 6 supports rotatably a worm wheel 13 in the case, that is, a gear chamber 25 by a bush 22 of a bearing section 6a. The output shaft 11 is restricted on movement in the direction of the shaft line to the gear case 6 via a washer 23 by a fixing ring 24 joined to the front end of the output shaft 11.

On the side of the gear case 6, an electric motor 16 for generating driving force is attached by set screws 69. The electric motor 16 has a worm gear 17 on the output section. As a material of the worm gear 17, an iron series metal, aluminum, and resin may be considered, though in this embodiment, an iron material having a highest strength is adopted. The worm gear 17 is stored in the gear case 6 and meshes with the worm wheel 13.

On the top of the worm wheel 13, a columnar magnet holder 10 made of aluminum which is a mount member of the sensing element is fixed concentrically with the rotational center of the worm wheel 13 by metal flow, fitting junction, or an adhesive. On the top of the magnet holder 10, a cylindrical magnet member 8 which is a sensing element is fixed by caulking, fitting junction, or an adhesive. Here, the magnet member 8, the magnet holder 10, the worm wheel 13, and the output shaft 11 all rotate integrally.

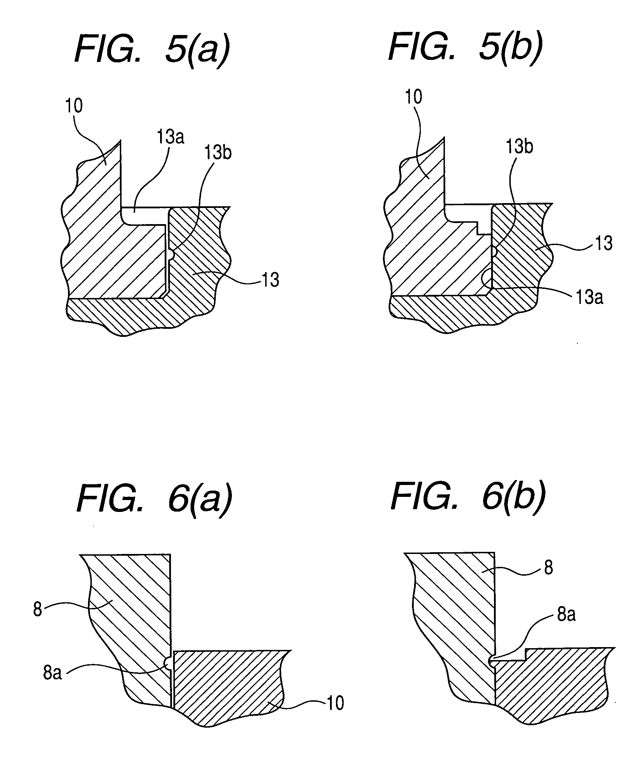

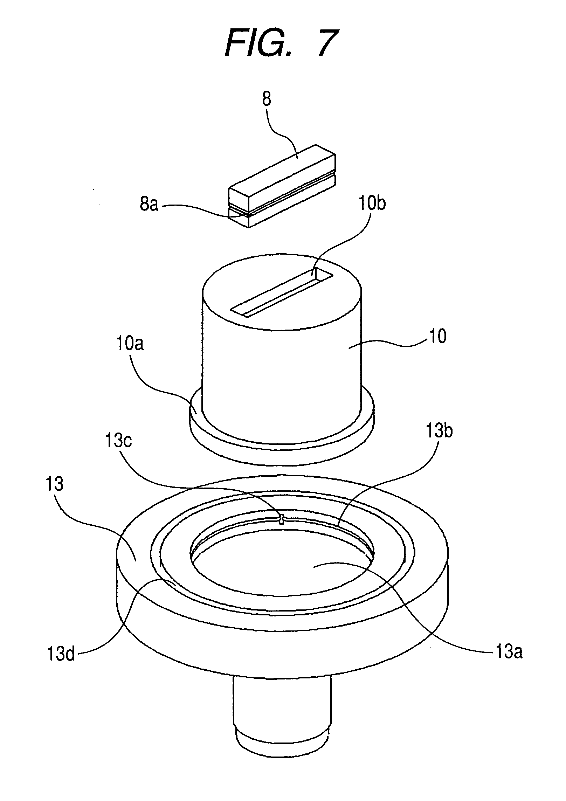

A preferred and detailed embodiment of junction between the worm wheel 13 and the magnet holder 10 and junction between the magnet holder 10 and the magnet member 8 will be explained by referring to Fig. 5 to 7.

On the top of the worm wheel 13, at the position concentric with the rotational center of the worm wheel 13, a circular magnet holder insertion concavity 13a is formed. On the inner peripheral surface of the magnet holder insertion concavity 13a, a circular ring-shaped concave slit 13b and a key slit-shaped perpendicular concave slit 13c are formed. On the top of the worm wheel 13, on the outer periphery side of the magnet holder insertion concavity 13a, the circular ring-shaped concave slit 13b is formed concentrically with the magnet holder insertion concavity 13a.

For the junction between the magnet holder 10 and the worm wheel 13, metal flow is used. Concretely, the magnet holder is inserted into the magnet holder insertion concavity 13a of the worm wheel 13 and then at a load of plastic-deforming an insertion flange 10a of the magnet holder 10, the insertion flange 10a of the magnet holder 10 is punched from the top toward the bottom.

By doing this, as shown in Fig. 5(b), the magnet holder material (aluminum) flows in the circular ring-shaped concave slit 13b of the worm wheel 13 and the vertical movement of the magnet holder 10 is restricted. Further, the magnet holder material flows also in the perpendicular concave slit 13c of the worm wheel 13, so that a key junction state is obtained and the magnet holder 10 is prevented from rotational displacement from the worm wheel 13. Further, the circular ring-shaped concave slit 13b acts as a buffer slit for preventing the external form of the worm wheel 13 from deformation by the force in the direction of the outer periphery of the worm wheel of the magnet holder 10 flowing in by the punching.

Further, one or more circular ring-shaped concave slits 13b and perpendicular concave slits 13c of the worm wheel 13 are required and the shape of these slits may be the mess shape formed by knurling. The slit depth is set to the difference or more between the heat shrinkage amount of the joined part (flow-in part) of the magnet holder 10 and the heat shrinkage amount of the worm wheel 13. By doing this, at the time of heat shrinkage, the margin to be caught by the circular ring-shaped concave slits 13b and perpendicular concave slits 13c will not eliminated, thus the magnet holder 13 can be prevented from moving in the vertical direction and rotational direction (dropping out of the magnet holder).

The magnet member 8 is a bar magnet having S and N magnetic poles at both ends and on the side periphery, a concave slit 8a is formed. On the top of the magnet holder 10, a rectangular magnet member insertion concavity 10b for inserting the magnet member 8 is formed so as to extend in the radial direction passing the center of the magnet holder 10.

For the junction between the magnet member 8 and the magnet holder 10, caulking is used. Concretely, the magnet member 8 is inserted into the magnet member insertion concavity 13b of the magnet holder 10 and then the outer peripheral part of the magnet member insertion concavity 13b of the magnet holder 10, at a pressure of plastic-deforming the magnet holder member, is punched from the top toward the bottom.

By doing this, as shown in Fig. 6(b), the magnet holder material flows in the concave slit 8a of the magnet member 8 and is caulked. By this caulking, the magnet member 8 is fixed to the magnet holder 10. Here, the depth of the concavity slit 8a is set to the difference or more between the heat shrinkage amount of the magnet holder 10 and the heat shrinkage amount of the magnet member 8. By doing this, at the time of heat shrinkage, the margin to be caught by the concave slit 8a will not be eliminated, thus the magnet member 8 can be prevented from moving in the vertical direction (dropping out of the magnet member).

On the upper part of the gear case 6, by set screws 9 and bushes 12, a board case 7 of a plastic molded article and a board base member 5 made of aluminum are together tightened and fixed. On the upper part of the board case 7, a board cover 1 is fixed hermetically by an epoxy or silicone adhesive. The assembly of the board case 7, the board base member 5, and the board cover 1 forms a controller case 56 of a closed structure.

The controller case 56 fixes internally a board chamber 26 separated hermetically from the inside (the gear chamber 25) of the gear case 6 by the board base member 5. The board base member 5 is a bottom plate of the controller case 56 and serves as a partition for hermetically separating the gear chamber 25 and the board chamber 26.

On the board case 7, an electric motor connector 19 and an external connector 20 are formed integrally. To the electric motor connector 19, an electric motor connector 18 of motor connection lines 14 and 15 of the electric motor 16 is electrically connected. The external connector 20 is used to communicate with the outside of the shift controller, supply a supply voltage, and input an electric signal.

On the board base member 5 in the board chamber 26, a wiring board 2 for an electric controller (shift controller) is positioned by positioning pins 93 and then is adhered and fixed by an epoxy or silicone adhesive. On the wiring board 2, a non-contact rotary sensor 3 of a magnetism detection method, a microcomputer 4, and an electric motor drive circuit 47 are mounted.

The wiring board 2 is stored in the clean board chamber 26 of the controller case 56 hermetically separated from the inside of the gear case 6, that is, the gear chamber 25, so that the wiring board 2 is not exposed in a very bad atmosphere including oil of the gear chamber 25 and worn metallic powder of the gears, and the wiring board 2 can be protected from substances adversely affecting the electronic circuit such as dust and oil which are considered to be generated in the machines, and malfunctions of the electric controller due to short-circuiting of the conductors of the wiring board 2 will not be caused.

Further, choices of assembly steps can be realized such that the machines and electronic circuit are manufactured mutually in remote places, are transported to places where they can be assembled, and are assembled later.

### Angle detection constitution:

As shown in Fig. 4, at a certain distance (air gap G) from the top of the magnet member 8, the bottom of the board base 5 is positioned. The non-contact rotary sensor 3 of the wiring board 2 and the magnet member 8 are desirably arranged ideally on the same shaft.

On the other hand, on the upper part of the gear case 6, the worm wheel 13 and a cylindrical opening 57 concentric with the center of the magnet holder 10 are formed. On the board base 5 of the controller case 56, a cylindrical part 58 fitting into the cylindrical opening 57 are formed. On the outer peripheral part of the cylindrical part 58, a peripheral slit 58a is formed concentrically and in the peripheral slit 58a, an O-ring 21 of an elastic body is mounted.

The cylindrical part 58 of the board base 5 is fit into the cylindrical opening 57 of the gear case 6, so that by the circular fitting, variations in assembling are eliminated and the board base 5 is highly accurately positioned and mounted uniquely to the gear case 6. When the wiring board 2 is correctly positioned and fixed to the board base 5, by the aforementioned positioning of the board base 5 to the gear case 6, the sensor 3 on the wiring board 2 and the magnet member 8 are ideally arranged on the same shaft.

Furthermore, the fitting between the cylindrical part 58 of the board base 5 and the cylindrical opening 57 of the gear case 6 is preferably a minute clearance fitting, thus an automatic center adjustment operation by the O-ring is obtained, and the attaching position accuracy of the board base 5 to the gear base 6 can be enhanced more, and the coaxial arrangement accuracy of the sensor 3 on the wiring board 2 and the magnet member 8 is improved more.

Particularly, the non-contact rotary sensor of a magnetism detection type detects the rotational angle of the rotator (gear) by changing in the magnetic field, so that to enhance the detection accuracy, the magnetic field acting on the sensor element is preferably symmetrical to the sensor element with respect to point. Therefore, the sensor on the controller case side must be arranged on the same axis as that of the magnet which is the sensing element on the rotator.

In this case, the controller case is positioned and mounted on the gear case by the fitting between the cylindrical part and the cylindrical opening, and the attaching position accuracy of the controller case to the gear case is enhanced by the center adjusting operation of the O-ring, so that the sensor can be arranged on the same axis as that of the rotational center of the sensing element on the gears, thus the sensor accuracy can be improved.

The board base 5 itself and the cylindrical part 58 function as heat radiation fins and radiate the operation heat of the wiring board 2. Further, on the fitting part between the cylindrical part 58 of the board base 5 and the cylindrical opening 57 of the gear case 6, high temperature conductive grease mixed with metal powder is coated, thus dragging during fitting assembling can be prevented, and the heat conduction contact area between the board base 5 and the gear case 6 is increased, and better results can be obtained.

Further, to correct effects on the sensor due to displacement for each sample caused by assembly errors of the magnet holder 10 and soldering errors of the sensor 3 and variations in the distance (air gap G) between the non-contact rotary sensor 3 of a magnetism detection type and the magnet member 8, after product assembling at normal temperature, the individual difference of sensor output is corrected.

Variations in the air gap G due to temperature changes cause deterioration of the sensor accuracy. The electric motor unit with a controller 200, on the bottom of the gear case 6, is fixed and restricted to the transfer case assembly 103. On the basis of the bottom of the gear case 6, the interval from the bottom of the gear case 6 to the sensor 3 is mainly composed of the gear case 6, the board case 5, and the wiring board 2. Further, the interval from the bottom of the gear case 6 to the magnet member 8 is mainly composed of the gear case 6, the bush 22, the worm wheel 13, and the magnet holder 10. The air gap G should be changeless ideally without varying with temperature and time, though practically, it varies with thermal expansion and thermal shrinkage due to the temperature of the constituent members aforementioned.

Therefore, when members of materials different in the coefficient of linear expansion are used for the constituent members aforementioned, the air gap G varies with changing in the temperature and the sensor accuracy is adversely affected. On the other hand, the gear case 6 and the board base 5 are composed of an aluminum material which is excellent in rigidity and light in weight, and a ceramics material (Al₂O₃, etc.) is adopted for the wiring board 2, and a sintered article of an iron material is adopted for the worm wheel 13. As a material of the magnet holder 10, resin such as PBT and PPS and aluminum may be considered. Table 1 gives the length, coefficient of linear expansion, and displacement due to heat of each of the constituent members aforementioned.

**Table 1**

| Route | Gear case bottom → sensor | | | Gear case bottom → magnet member | | | | |
|---|---|---|---|---|---|---|---|---|
| Component name | Gear case | Wiring board | Wiring board | Gear case | Bush | Worm wheel | Magnet holder | |
| Component material | Aluminum | Aluminum | Ceramics | Aluminum | Resin | Iron sintered | Aluminum | Resin |
| Length [mm] | 16.7 + 38.3 | 2.5 | 1.5 | 16.7 | 1.0 | 5.7 | 23.6 | |
| Coefficient Coefficient of linear expansion [10⁻⁶ mm/°C] | 21.5 | 21.5 | 5.2 | 21.5 | 30.0 | 17.0 | (A) 24 | (B) 147 |
| Displacement amount due to heat [10⁻⁶ mm/°C] | 1182.5 | 53.8 | 7.7 | 359.0 | 30.0 | 96.9 | (A) 566 | (B) 3469 |
| Total displacement amount due to heat (mm/100 °C] | 0.1244 | | | (A) 0.1052 (B) 0.3955 | | | | |

In Table 1, when resin (PBT) is used for the magnet holder 10 under the condition of temperature change ΔT = 100 °C, the total deformation amount (A) is 0.3955 mm and the air gap variation is 0.3955 mm - 0.1244 mm = 0.2711 mm. On the other hand, the table shows that when an aluminum material is used for the magnet holder 10, the total deformation amount (B) is 0.1052 mm and the air gap variation G is 0.1052 mm - 0.1244 mm = 0.0192 mm.

This embodiment, since an aluminum material is adopted for the magnet holder 10, is designed to suppress variations in the air gap G. By doing this, regardless of temperature changes, the rotational position can be accurately detected stably.

### Wiring board:

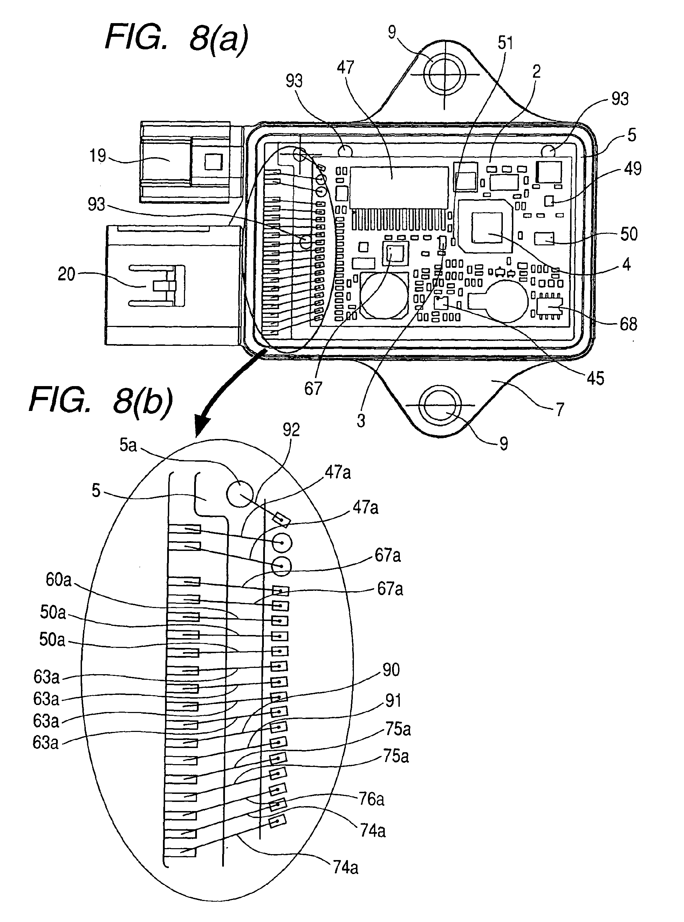

Fig. 8(a) is a plan view of the board case 7, viewed from right above, from which the board cover 1 is removed.

On the wiring board 2, the microcomputer 4, the sensor 3, a sensor amplifier 45, an electric motor drive circuit 47, a regulator 49, a CAN (control area network) driver 50, a lamp drive circuit 51, a clutch drive circuit 67, and an EEPROM 68 are arranged. The interface with the outside is connected to the electric motor connector 19 and the connector 20 via electric motor wires 47a, CAN wires 50a, a switch wire 60a, lamp wires 63a, clutch wires 67a, battery wires 74a, ground wires 75a, an ignition wire 76a, and calibration wires 90 and 91 (refer to Fig. 8(b)).

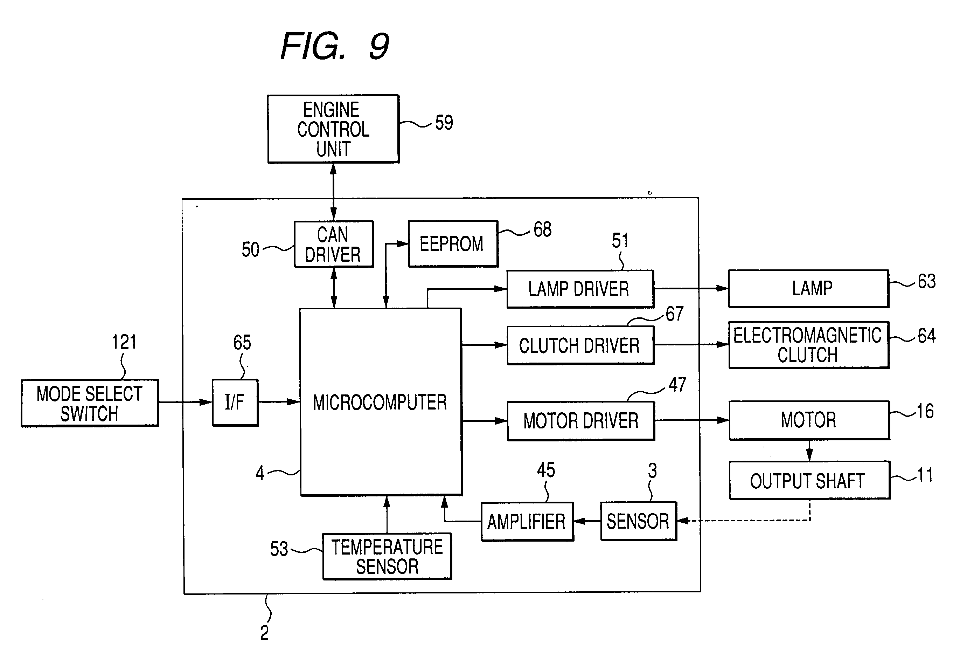

Fig. 9 is a functional block diagram of the shift controller. The microcomputer 4 mounted on the wiring board 2 receives a signal of a mode select switch 121 via an input interface 65, transmits and receives a signal from an engine control unit (engine controller) 59 by CAN communication by the CAN driver, and calculates the target rotational angle of the output shaft 11. Further, the microcomputer 4, using output of the sensor 3, output of the temperature sensor 53, and moreover some constants preserved beforehand in the EEPROM 68, calculates the actual rotational angle of the output shaft 11.

The microcomputer 4, on the basis of the target rotational angle of the output shaft 11 and the calculated current actual angle information of the output shaft 11, outputs a signal of an instruction value for driving the electric motor 16 to the electric motor drive circuit 47.

The electric motor drive circuit 47 controls the current on the basis of this instruction value and drives the electric motor 16. The current for driving the electric motor 16 is transferred to the electric motor 16 via the electric motor wires 47a, the electric motor connectors 19 and 18, and the electric motor connection lines 14 and 15.

Further, the shift controller has a function for driving a lamp 63 for notifying a driver of the current drive mode and a function for driving an electromagnetic clutch 64.

A ground wire 92 (refer to Fig. 8(b)) is electrically connected to a ground connection part 5a of the board base 5 from the wiring board 2. The board base 5 is continuity-joined to the gear case 6 and the gear case 6 is continuity-jointed to the transfer case assembly 103. The ground part aims at electrical resistance to electrostatic noise and radio noise and is desired to have a high electric capacity and be electrically stable. For that purpose, it must be composed of a conductor having a larger volume.

Therefore, in this embodiment, the board base 5 and the gear case 6 respectively adopt an aluminum material which is a conductor and are electrically joined, thus a ground part having a large electric capacity is reserved.

### Heat radiation:

The operation peripheral temperature range of the shift controller 200 is decided to be from -40 °C to 125 °C. Particularly, the operation at high temperature is questionable and when the electric motor 16 is driven, furthermore temperature rise of the wiring board 2 is expected. An object of arrangement of the board base 5 is to adhere and fix the wiring board 2, though at the same time, it plays a role of heat radiation and retaining of the wiring board 2.

Therefore, as a material of the board base 5, a material the thermal conductivity and strength of which are higher is desired. Further, the board base 5 is arranged between the magnet member 8 and the sensor 3 and must be free of obstruction to the magnetic circuit. Therefore, the board base 5 must be a non-magnetic substance not affecting the magnetic circuit. In this embodiment, under the aforementioned condition, as a material of the board base 5, an aluminum metal is adopted.

To efficiently radiate heat generated on the wiring board 2, a heat radiation route from the wiring board 2 must be reserved. The heat radiation route is said to be a route from the wiring board 2 to the atmosphere, the board base 5, and the gear case 6. However, the main heat radiation route may be considered to be a route from the wiring board 2 to the board base 5. As described above, when the board base 5 is formed in a shape of heat radiation fins, the heat radiation area is increased and the heat radiation property is enhanced.

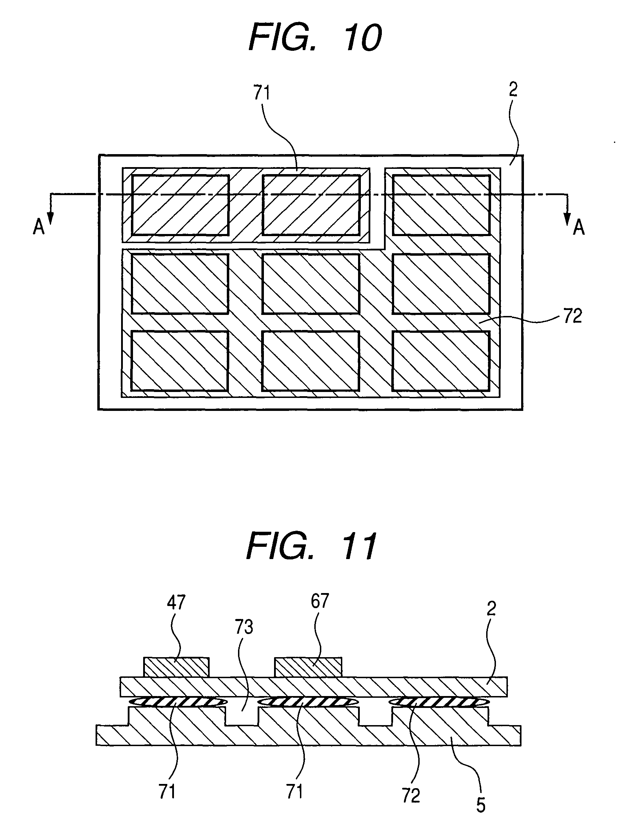

The wiring board 2, as shown in Figs. 10 and 11, is positioned and adhered to the board base 5 by two kinds of adhesives such as a high temperature conductive adhesive (adhesive A) 71 and a very strong adhesive (adhesive B) 72. The high temperature conductive adhesive 71 is a resin adhesive containing a metallic filler having high thermal conductivity such as a silver filler, for example, a brand name of "X-32-2133" by Shinetsu Kagaku Kogyo, Ltd. The very strong adhesive 72 may be a one whose adhesive strength is higher than that of the high temperature conductive adhesive 71 and there is a general silicone adhesive such as a brand name of "TES322" available.

Table 2 gives comparison results of the adhesive materials. In this case, Table 2 compares physical property value data of X-32-2133 as a high temperature conductive adhesive (adhesive A) 71 and TES322 as a very strong adhesive (adhesive B) 72.

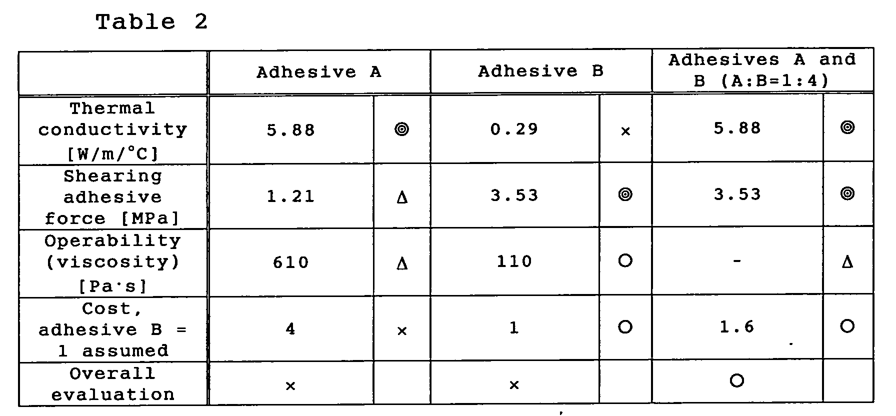

Table 2 shows that the very strong adhesive (adhesive B) 72 has high adhesive strength but inferior thermal conductivity (heat radiation property) and the high temperature conductive adhesive (adhesive A) 71 having enhanced thermal conductivity is disadvantageous in the viscosity controlling the wettability, adhesive strength, and cost.

To compensate for these inferior points, in this embodiment, both two kinds of adhesives of the high temperature conductive adhesive (adhesive A) 71 and the very strong adhesive (adhesive B) 72 are used. Concretely, for adhesion of the area right under the heat generation parts such as the electric motor drive circuit 47 and the clutch drive circuit 67, the high temperature conductive adhesive (adhesive A) 71 is used and for the other parts, the very strong adhesive (adhesive B) 72. By doing this, while keeping the adhesive strength of the overall wiring board 2, adhesion whose high temperature conductivity (heat radiation property) is enhanced can be realized.

### Branch of the pattern wires:

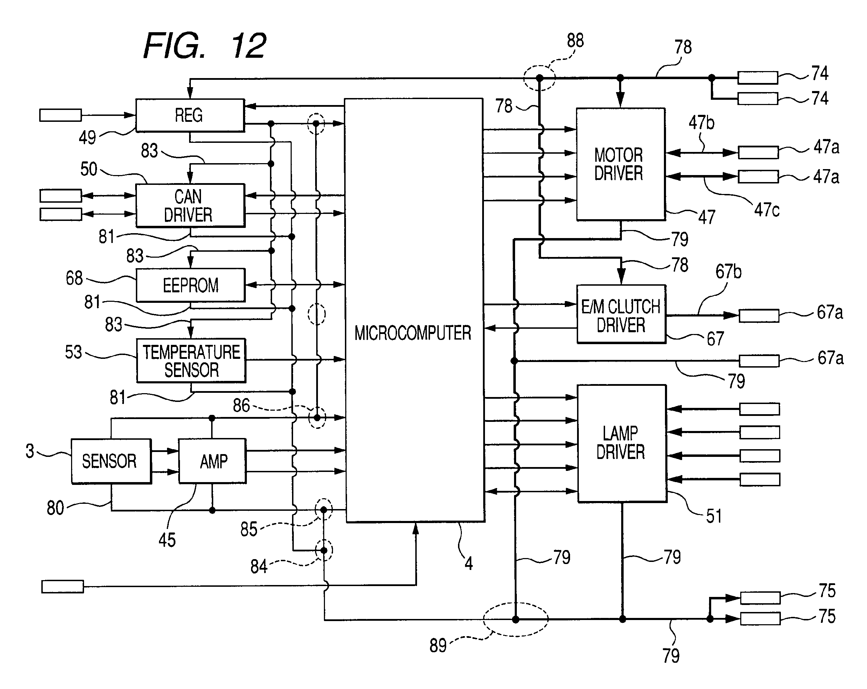

Fig. 12 shows the wiring pattern formed on the wiring board 2. To drive the electric motor 16 and the electromagnetic clutch 64, a large current of 10 A to 30 A is necessary. Further, at the same time, the amplifier 45 for amplifying the sensor 3 and a signal thereof is arranged on the same wiring board 2 as that of the large current pattern and effects of the large current on other circuit parts such as variations in the ground line and noise must be suppressed.

Firstly, when considering driving the electric motor 16, the current for driving the electric motor, according to an instruction from the microcomputer 4, sequentially flows from battery connection parts 74 to a battery large current wire 78, the electric motor drive circuit 47, an electric motor wire 47b, the electric motor wires 47a, the electric motor 16, the electric motor wires 47a, an electric motor wire 47c, a ground large current wire 79, and ground connection parts 75.

The driving current of the electromagnetic clutch 64 sequentially flows from the battery connection parts 74, the battery large current wire 78, the clutch drive circuit 67, a clutch drive wire 67b, the clutch drive wires 67a, the electromagnetic clutch 64, the clutch drive wires 67a, the ground large current wire 79, and the ground connection parts 75.

When to these large current routes, particularly the ground large current wire 79, the grounds of other parts are connected at a plurality of points, by a large current, voltage level differences are caused on the grounds. Particularly, in the amplifier 45 for amplifying the sensor 3 and a signal thereof, the ground voltage difference affects straight the sensor accuracy. Further, also for the other circuit parts, malfunctions will be caused.

In this embodiment, the ground large current wire 79 and control ground wires 81 branch at a wire branch point 84 (one point branch) and moreover the control ground wire 81 and a sensor ground wire 80 branch at a wire branch point 85 (one point branch). Furthermore, the sensor power source wire, so as to be hardly affected by other circuit parts, branches from control power source wires 83 of other parts at a wire branch point 86 (one point branch).

On the wiring board 2, the large current wiring patterns of the battery large wire 78 and the ground large current wire 79 branch respectively from the signal pattern and sensor pattern at connection points (branch points) 88 and 89 (one point connection).

By doing this, even if a large current flows through the large current wiring patterns, an occurrence of a potential difference in the ground of the signal pattern and the ground of the sensor pattern is avoided, and the effect of ground variations due to the large current on other circuit parts is suppressed, and furthermore, a pattern design for suppressing the effect of the large current and other parts on the sensor 3 and the amplifier 45 is obtained.

### Wiring pattern of each layer of the board:

The wiring board 2 has a function for driving the electric motor 16 and the electromagnetic clutch 64. These units are driven by a current, and currents of a maximum of 30 A and 10 A are respectively required to flow, and generation of heat due to the conductor resistance of each pattern on the board is worried about. To suppress the generation of heat, the conductor resistance must be reduced and it is desired to shorten the each conductor pattern length on the wiring board 2 and spread the conductor pattern width. However, actually, due to restrictions on the manufacturing cost of the circuit board and material cost of the board case, the circuit board size is also restricted.

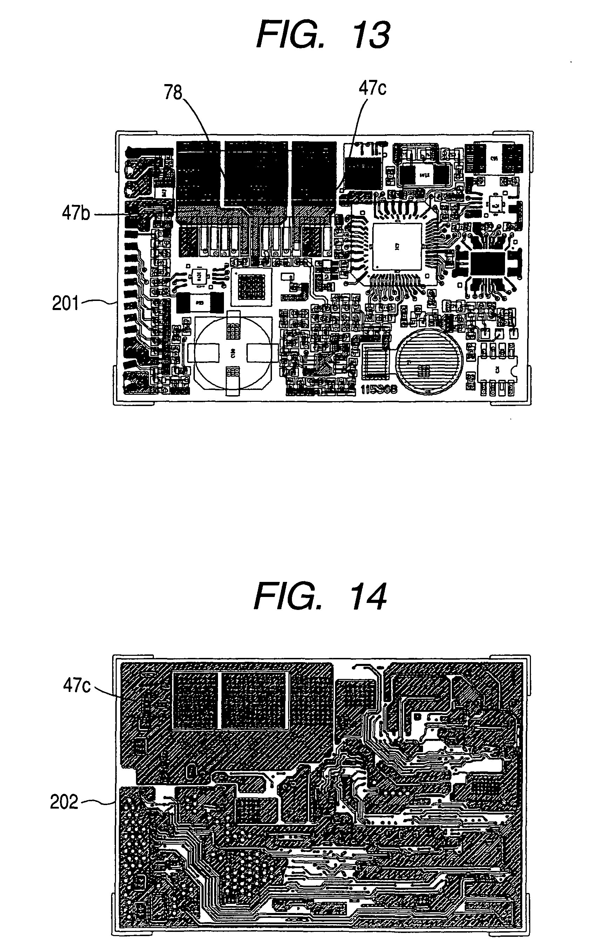

In this respect, in this embodiment, to install the aforementioned pattern with the conductor resistance reduced in the limited board size, the large current pattern is dispersed in each of the conductor layers of the wiring board 2. In Figs. 13 to 17, the main pattern arrangement of each layer when a multi-layer wiring board of a 5-layer structure is used is shown.

On a first board (insulating board) 201, as shown in Fig. 13, the battery large current wire 78 and the electric motor wires 47b and 47c are arranged and on a second board 202, as shown in Fig. 14, the electric motor wire 47c is arranged.

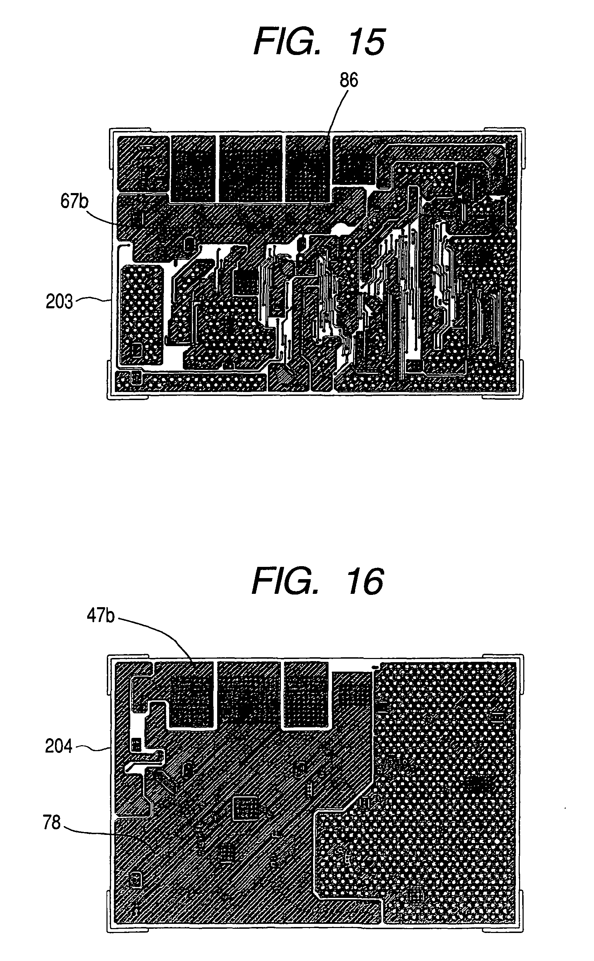

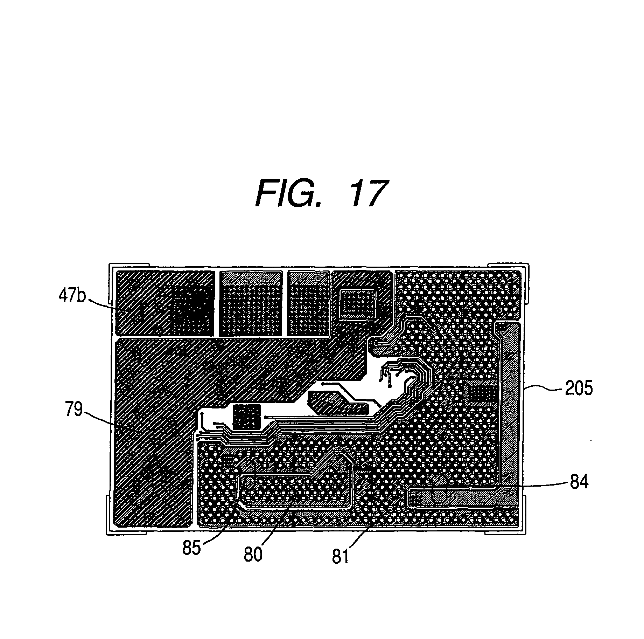

On a third board 203, as shown in Fig. 15, the clutch wire 67b is arranged, and on a fourth board 204, as shown in Fig. 16, the battery large current wire 78 and the electric motor wire 47b are arranged, and on a fifth board 205, as shown in Fig. 17, the battery large current wire 79 and the electric motor wire 47b are arranged.

By the aforementioned arrangement, on the ceramic wiring board 2 of a board size of 38 mm x 56.5 mm, the conductor resistance of the driving part of the electric motor is controlled to about 80 mΩ.

### Rewriting and debugging of the control software:

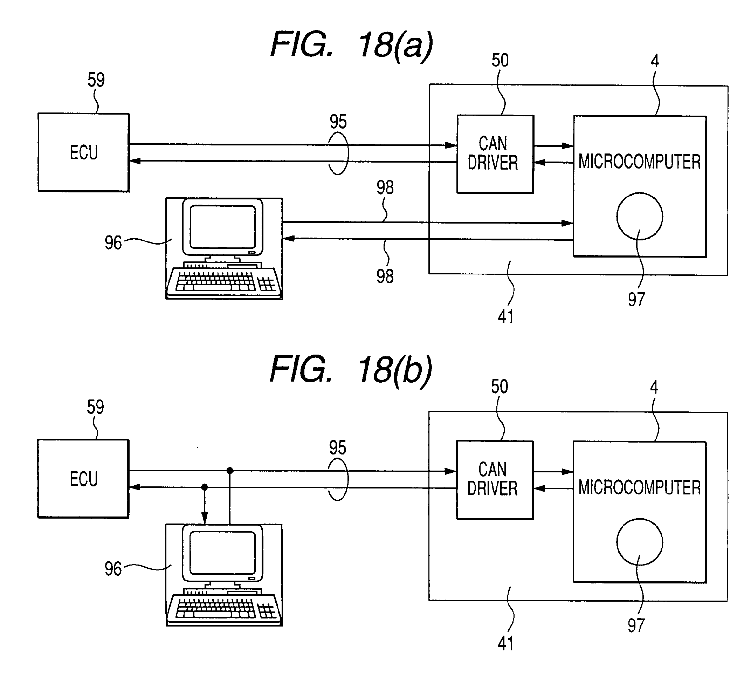

As shown in Fig. 9, the microcomputer 4 of the shift controller is connected to the engine controller 59 via CAN communication. As shown in Figs. 18(a) and (b), control software 97 mounted on the microcomputer 4, on the basis of these information and a signal of the mode select switch 121, gives an instruction signal to the electric motor drive circuit 47 and the clutch drive circuit 67 arranged on the wiring board 2.

When the electric motor 16 and the electromagnetic clutch 64 get into an open condition, the control software 97 judges the condition and transfers it to the engine controller 59 via CAN communication.

Namely, these operations are decided by the control software 97 mounted on the microcomputer 4. The control software 97 is generally edited and compiled by a personal computer 96 and then is transferred and mounted on the microcomputer 4. Further, after mounting, the control software, to decide a control constant and other variables, performs various debugging operations (ROM rewriting and RAM monitoring of the microcomputer 4, etc.).

The transfer and debugging operations of the control software 97, as shown in Fig. 18(a), can be performed via software debugging wires 98 in the same way as with the conventional. In this case, as a communication line from the shift controller, two systems of CAN communication wires 95 and the software debugging wires 98 are necessary.

In this respect, as shown in Fig. 18(b), it is possible to branch the CAN communication wires 95 used to communicate with the engine controller 59 into the personal computer 96, standardize the communication line to the CAN communication wires 95, thereby execute RAM reading, RAM rewriting, ROM reading, and ROM rewriting in the microcomputer 4 by CAN communication, and reduce the communication wiring cost and the number of terminals.

As shown by the above description, according to the electric motor unit with a controller of a machinery and electricity integration type of the present invention, the mechanical structure and electrical structure eliminate the possibilities of variations and malfunctions due to mechanical and thermal factors and can realize excellent operation reliability and durability.

## Claims

1. An electric motor unit with a controller comprising a gear case having built-in gears, an electric motor attached to said gear case for driving to rotate said gears, and a controller case attached to said gear case having a built-in electric controller for controlling to drive said electric motor, wherein:
a sensing element is attached to said gears, and a sensor for sensing said sensing element and detecting a rotational angle of said gears is attached in said controller case, and
said gear case has a cylindrical opening concentric with a rotational center of said gears, and said controller case has a cylindrical part fit into said cylindrical opening, and by a fitting between said cylindrical part and said cylindrical opening, said controller case is positioned and mounted on said gear case.

2. An electric motor unit with a controller according to Claim 1, wherein in said fitting part between said cylindrical part and said cylindrical opening, an O-ring made of an elastic body is clamped.

3. An electric motor unit with a controller according to Claim 1 or 2, wherein said controller case is a closed structure case hermetically separated from an inside of said gear case.

4. An electric motor unit with a controller comprising a gear case having built-in gears, an electric motor attached to said gear case for driving to rotate said gears, and a controller case attached to said gear case having a built-in electric controller for controlling to drive said electric motor, wherein:
a sensing element is attached to said gears, and a sensor for sensing said sensing element and detecting a rotational angle of said gears is attached in said controller case, and
members for deciding a separation distance between said sensing element and said sensor are composed of the materials which have the same kind of the linear expansion coefficient substantially.

5. An electric motor unit with a controller according to any one of Claims 1 to 3, wherein members for deciding a separation distance between said sensing element and said sensor are composed of the materials which have the same kind of the linear expansion coefficient substantially.

6. An electric motor unit with a controller according to Claim 4 or 5, wherein said sensing element is mounted on said gears by a mount member and said members for deciding said separation distance between said sensing element and said sensor include said mount member, said gear case, and said controller case.

7. An electric motor unit with a controller according to Claim 6, wherein said mount member, said gear case, and said controller case are composed of an aluminum series metal.

8. An electric motor unit with a controller comprising a gear case having built-in gears, an electric motor attached to said gear case for driving to rotate said gears, and a controller case attached to said gear case having a built-in wiring board of an electric controller for controlling to drive said electric motor, wherein:
said wiring board is composed of a multi-layer wiring board with many insulating base materials having conductor layers laminated in layers, and in said conductor layer of each insulating base material, a large current wiring pattern is dispersed and arranged.

9. An electric motor unit with a controller comprising a gear case having built-in gears, an electric motor attached to said gear case for driving to rotate said gears, and a controller case attached to said gear case having a built-in wiring board of an electric controller for controlling to drive said electric motor, wherein:
said wiring board includes a large current wiring pattern, a signal pattern, and a sensor pattern and said large current wiring pattern, said signal pattern, and said sensor pattern are connected at one point.

10. An electric motor unit with a controller according to Claim 9, wherein said wiring board is composed of a multi-layer wiring board with a plurality of conductor layers laminated in layers, and in said conductor layers, said large current wiring pattern is dispersed and arranged.

11. An electric motor unit with a controller according to any one of Claims 8 to 10, wherein said wiring board is adhered and fixed to said controller case by two kinds of adhesives such as a high temperature conductive adhesive and a very strong adhesive whose adhesive strength is higher than that of said high temperature conductive adhesive.

12. An electric motor unit with a controller comprising a gear case having built-in gears, an electric motor attached to said gear case for driving to rotate said gears, and a controller case attached to said gear case having a built-in wiring board of an electric controller for controlling to drive said electric motor, wherein:
said wiring board is adhered and fixed to said controller case by two kinds of adhesives such as a high temperature conductive adhesive and a very strong adhesive whose adhesive strength is higher than that of said high temperature conductive adhesive.

13. An electric motor unit with a controller comprising a gear case having built-in gears, an electric motor attached to said gear case for driving to rotate said gears, and a controller case attached to said gear case having a built-in wiring board of an electric controller for controlling to drive said electric motor, wherein:
said controller case and said gear case are composed of a conductive material and a grounding part of said wiring board, said controller case, and said gear case are electrically connected.

14. An electric motor unit with a controller comprising a gear case having built-in gears, an electric motor attached to said gear case for driving to rotate said gears, and a controller case attached to said gear case having a built-in microcomputer for controlling to drive said electric motor, further comprising a function for performing RAM reading, RAM rewriting, ROM reading, and ROM rewriting in said microcomputer by controller area network communication.

15. An electric motor unit with a controller according to any one of Claims 1 to 14, further comprising a function for switching an operation condition of a drive line of a car such as a transmission and four-wheel drive transfer.
